# EUROPÄISCHE PATENTSCHRIFT

(11) **EP 1 642 380 B1**
(45) Veröffentlichungstag und Bekanntmachung des Hinweises auf die Patenterteilung: **08.10.2008**
(21) Anmeldenummer: 04736383.3
(22) Anmeldetag: 09.06.2004
(51) Int. Cl.: H02K 33/02

(54) **VERFAHREN ZUR STEUERUNG EINES ELEKTROMOTORS MIT MEHREREN SCHWINGUNGSFÄHIGEN MOTORKOMPONENTEN**
METHOD FOR CONTROLLING AN ELECTRIC MOTOR COMPRISING SEVERAL OSCILLATING MOTOR COMPONENTS
PROCEDE DE COMMANDE D'UN MOTEUR ELECTRIQUE POURVU DE PLUSIEURS COMPOSANTS OSCILLANTS

(30) Priorität: 09.07.2003 DE 10330979
(43) Veröffentlichungstag der Anmeldung: 05.04.2006
(73) Patentinhaber: Braun GmbH, 61476 Kronberg (DE)
(72) Erfinder: KRAUS, Bernhard, 35619 Braunfels (DE)
(74) Vertreter: Sievers, Uwe
(86) Internationale Anmeldenummer: PCT/EP2004/006198
(87) Internationale Veröffentlichungsnummer: WO 2005/006521

(56) Entgegenhaltungen:
- DE-B- 1 151 307
- US-A- 5 632 087
- US-A- 6 133 701
- US-A1- 2002 101 125
- US-A1- 2002 175 643
- PATENT ABSTRACTS OF JAPAN Bd. 1996, Nr. 02, 29. Februar 1996 (1996-02-29) & JP 7 265559 A (MATSUSHITA ELECTRIC WORKS LTD), 17. Oktober 1995 (1995-10-17)

## Beschreibung

Die Erfindung bezieht sich auf ein Verfahren zur Steuerung eines Elektromotors mit mehreren schwingungsfähigen Motorkomponenten zum Antreiben eines elektrischen Kleingeräts. Weiterhin bezieht sich die Erfindung auf ein elektrisches Kleingerät mit einem Elektromotor, der mehrere schwingungsfähige Motorkomponenten aufweist.

Es ist bereits bekannt, Elektromotoren für elektrische Kleingeräte, beispielsweise elektrische Rasierapparate, mit mehreren schwingungsfähigen Motorkomponenten auszustatten. So offenbart die DE 1 151 307 A einen Schwingankerantrieb für Trockenrasiergeräte mit hin- und hergehender Arbeitsbewegung eines Schermessers, der einen mit dem Gehäuse des Rasiergeräts fest verbundenen und U-förmig ausgebildeten Elektromagneten aufweist. In der Nähe der Pole des Elektromagneten sind ein Arbeitsanker und beiderseits des Arbeitsankers je ein Ausgleichsanker schwingfähig angeordnet. Im Betriebszustand schwingt der Arbeitsanker, der ein Schermesser antreibt, parallel zu den Polflächen des Elektromagneten, wobei die Ausgleichsanker eine dazu gegenphasige Schwingbewegung ausführen, um eine Übertragung der Schwingungen des Arbeitsankers auf das Gehäuse des Rasiergeräts möglichst zu verhindern.

Weiterhin ist aus der US 5 632 087 ein Trockenrasierer mit einem Linearmotor bekannt. Der Linearmotor weist eine Statorspule und mehrere mit Dauermagneten bestückte Läufer auf, die durch die Statorspule in lineare Schwingungsbewegungen versetzt werden. Die Auslenkungen der Läufer werden mit Hilfe von den Läufern zugeordneten Detektoren erfaßt und in Form eines Mittelwerts weiterverarbeitet. Dabei wird die Stromversorgung der Statorspule abhängig von dem Mittelwert so gesteuert, daß die Schwingungsamplituden sämtlicher Läufer möglichst konstant gehalten werden. Die Detektoren bestehen jeweils aus einem am jeweiligen Läufer angeordneten Dauermagneten und einer ortsfest montierten Sensorspule, in der durch Einwirkung des Dauermagneten eine von der Geschwindigkeit des jeweiligen Läufers abhängige Induktionsspannung generiert wird.

Der Erfindung liegt die Aufgabe zugrunde, ein elektrisches Kleingerät auf möglichst optimale Weise anzutreiben.

Diese Aufgabe wird durch ein Verfahren gemäß Anspruch 1 gelöst.

Beim erfindungsgemäßen Verfahren zur Steuerung eines Elektromotors mit mehreren schwingungsfähigen Motorkomponenten zum Antreiben eines elektrischen Kleingeräts werden die schwingungsfähigen Motorkomponenten durch ein Magnetfeld, das von einer Spule gemeinsam für die schwingungsfähigen Motorkomponenten erzeugt wird, in Schwingungsbewegungen versetzt. Die Besonderheit des erfindungsgemäßen Verfahrens besteht dabei darin, daß die Schwingungsbewegungen der schwingungsfähigen Motorkomponenten mittels eines elektrischen Signals, das der Spule zugeführt wird, individuell gesteuert werden.

Die Erfindung hat den Vorteil, daß mit einem vergleichsweise geringen Aufwand mehrere individuell steuerbare Antriebsbewegungen zur Verfügung gestellt werden können. Alle Antriebsbewegungen werden mittels einer gemeinsamen Spule erzeugt, deren Magnetfeld auf die jeweils mit einer Anordnung von Dauermagneten ausgestatteten, schwingungsfähigen Motorkomponenten einwirkt und diese dadurch direkt antreibt. Das erfindungsgemäße Verfahren ermöglicht somit die Realisierung verschiedener Antriebsfunktionen mit einem einzigen Motor, der einen sehr einfachen mechanischen und magnetischen Aufbau besitzt. Ein Getriebe oder andere Hilfsmittel zur Beeinflussung der Antriebsbewegungen werden nicht benötigt, so daß auch die dadurch verursachten Kosten und die damit einhergehenden Reibungsverluste entfallen. Außerdem ergibt sich dadurch die Möglichkeit, auch relativ hohe Schwingungsfrequenzen zu erzeugen. Das beim erfindungsgemäßen Verfahren verwendete elektrische Signal ist so beschaffen, daß das daraus mit Hilfe der Spule erzeugte Magnetfeld auf die einzelnen schwingungsfähigen Motorkomponenten jeweils eine andere Wirkung entfalten kann. Dies bedeutet, daß wegen der gemeinsamen Spule das Magnetfeld zwar immer auf alle schwingungsfähigen Motorkomponenten einwirkt, das Resultat dieser Einwirkung jedoch für jede schwingungsfähige Motorkomponente anders ausfallen kann.

In einem bevorzugten Ausführungsbeispiel wird diese individuelle Beeinflussung der Schwingungsbewegungen der einzelnen schwingungsfähigen Motorkomponenten durch das Magnetfeld dadurch erreicht, daß die schwingungsfähigen Motorkomponenten jeweils Bestandteile von Schwingungssystemen mit unterschiedlichen Resonanzfrequenzen sind. Da die Wirkung einer Anregung auf ein Schwingungssystem von dessen Resonanzfrequenz abhängt, entfaltet das Magnetfeld in der Regel für jede schwingungsfähige Motorkomponente eine andere Wirkung. Deshalb ist es beispielsweise möglich, die Schwingungsbewegungen der schwingungsfähigen Motorkomponenten jeweils über die Vorgabe der Frequenz des der Spule zugeführten elektrischen Signals individuell zu steuern. Abhängig davon, wie stark diese Frequenz von den einzelnen Resonanzfrequenzen abweicht, werden die Schwingungsbewegungen der schwingungsfähigen Motorkomponenten durch das mit dem Signal erzeugte Magnetfeld unterschiedlich beeinflußt.

Eine weitere Ansteuermöglichkeit besteht darin, daß das der Spule zugeführte elektrische Signal mehrere unterschiedliche Frequenzen enthält und die Schwingungsbewegungen der schwingungsfähigen Motorkomponenten jeweils über die Gewichtung der einzelnen Frequenzen im elektrischen Signal individuell gesteuert werden. Dabei ist es besonders vorteilhaft, wenn die einzelnen Frequenzen den Resonanzfrequenzen der Schwingungssysteme entsprechen, die mit den schwingungsfähigen Motorkomponenten ausgebildet werden. Auf diese Art und Weise können die Schwingungsbewegungen der schwingungsfähigen Motorkomponenten nahezu unabhängig voneinander und in weiten Bereichen variiert werden.

Das elektrische Signal kann der Spule in Form von Pulsen zugeführt werden. Dabei können die Schwingungsbewegungen der schwingungsfähigen Motorkomponenten jeweils über die Vorgabe eines Pulsmusters für das der Spule zugeführte elektrische Signal individuell gesteuert werden. Die Verwendung von Pulsen hat den Vorteil, daß die Signalerzeugung sehr wenig Aufwand erfordert und das Verfahren insbesondere auch bei elektrischen Kleingeräten eingesetzt werden kann, die nicht über einen Netzanschluß verfügen, sondern mit Batterien oder Akkus betrieben werden.

Mit dem erfindungsgemäßen Verfahren können insbesondere die Schwingungsamplituden der schwingungsfähigen Motorkomponenten mittels des der Spule zugeführten elektrischen Signals individuell gesteuert werden. Im Extremfall können die Schwingungsamplituden der schwingungsfähigen Motorkomponenten bis auf Null reduziert werden, so daß die schwingungsfähigen Motorkomponenten mittels des der Spule zugeführten elektrischen Signals individuell ein- oder ausgeschaltet werden. Dadurch läßt sich ohne zusätzlichen apparativen Aufwand eine automatisierte Ein- und Ausschaltung einzelner Antriebsfunktionen realisieren.

In einem bevorzugten Ausführungsbeispiel werden die Kenngrößen der tatsächlichen Schwingungsbewegungen der schwingungsfähigen Motorkomponenten mit Hilfe von Sensoren individuell für die schwingungsfähigen Motorkomponenten erfaßt. Als Kenngrößen der tatsächlichen Schwingungsbewegungen der schwingungsfähigen Motorkomponenten können jeweils insbesondere die Amplitude und/oder Frequenz und/oder Phase dienen. Die Kenngrößen können für die Steuerung der Schwingungsbewegungen der schwingungsfähigen Motorkomponenten verwendet werden, d. h. daß die Erzeugung des der Spule zugeführten elektrischen Signals jeweils abhängig von den erfaßten Kenngrößen durchgeführt werden kann. Besonders vorteilhaft ist dabei es, wenn die Erzeugung des der Spule zugeführten elektrischen Signals mittels einer geschlossenen Regelschleife durchgeführt wird. Durch diese Vorgehensweise läßt sich eine sehr präzise Steuerung der Schwingungsbewegung erreichen.

Die Erfindung betrifft weiterhin ein elektrisches Kleingerät mit einem Elektromotor, der mehrere schwingungsfähige Motorkomponenten aufweist, die mittels einer gemeinsamen Spule antreibbar sind, sowie mit einer Steuereinrichtung zur Ausgabe eines elektrischen Signals an die Spule, um wenigstens zeitweise ein Magnetfeld zur Beeinflussung der Schwingungsbewegungen der schwingungsfähigen Motorkomponenten zur erzeugen. Die Besonderheit des elektrischen Kleingeräts besteht darin, daß mit der Steuereinrichtung ein elektrisches Signal zur individuellen Beeinflussung der Schwingungsbewegungen der schwingungsfähigen Motorkomponenten erzeugbar ist.

Beim erfindungsgemäßen elektrischen Kleingerät kann eine der schwingungsfähigen Motorkomponenten als ein Spulenkern für die Spule ausgebildet sein. Diese schwingungsfähige Motorkomponente übernimmt somit die Funktion eines üblichen Stators, ohne allerdings ortsfest angeordnet zu sein. Dies hat den Vorteil, daß auch die als Spulenkern ausgebildete schwingungsfähige Motorkomponente eine Antriebsfunktion übernehmen kann und daß die Übertragung von unerwünschten Vibrationen vom Elektromotor auf das elektrische Kleingerät weitgehend vermieden werden kann. Dabei ist es insbesondere von Vorteil, wenn der Spulenkern relativ zur Spule beweglich angeordnet ist. Dies bedeutet, daß die Spule ortsfest angeordnet werden kann und somit leichter zu kontaktieren ist als eine bewegliche Spule. Außerdem wird die schwingende Masse relativ gering gehalten, da die Spule nicht mitschwingt.

Bei einem·Ausführungsbeispiel des elektrischen Kleingeräts ist der Elektromotor als oszillierender Linearmotor ausgebildet. Eine derartige Ausbildung des Elektromotors ist beispielsweise bei einem elektrischen Rasierapparat vorgesehen. Bei einem weiteren Ausführungsbeispiel ist der Elektromotor als oszillierender Rotationsmotor ausgebildet. Dies kann beispielsweise bei einer elektrischen Zahnbürste der Fall sein.

Die Erfindung wird nachstehend an Hand der in der Zeichnung dargestellten Ausführungsbeispiele näher erläutert.

Es zeigen:
- Fig. 1: ein Ausführungsbeispiel für einen oszillierenden Linearmotor in einer schematischen Seitenansicht,
- Fig. 2: die Läufer des Ausführungsbeispiels aus Fig. 1 in einer schematischen Aufsicht,
- Fig. 3: ein Diagramm zur Veranschaulichung des Schwingungsverhaltens des in den Fig. 1 und 2 dargestellten oszillierenden Linearmotors,
- Fig. 4: ein Blockschaltbild zur Veranschaulichung des erfindungsgemäßen Steuerverfahrens,
- Fig. 5, 6,7: Diagramme zur Veranschaulichung der individuellen Ansteuerung von zwei Läufern eines Linearmotors,
- Fig. 8: ein Ausführungsbeispiel für einen statorlosen, oszillierenden Linearmotor in einer schematischen Seitenansicht und
- Fig. 9: ein Ausführungsbeispiel für einen statorlosen, oszillierenden Rotationsmotor in einer schematischen Seitenansicht.

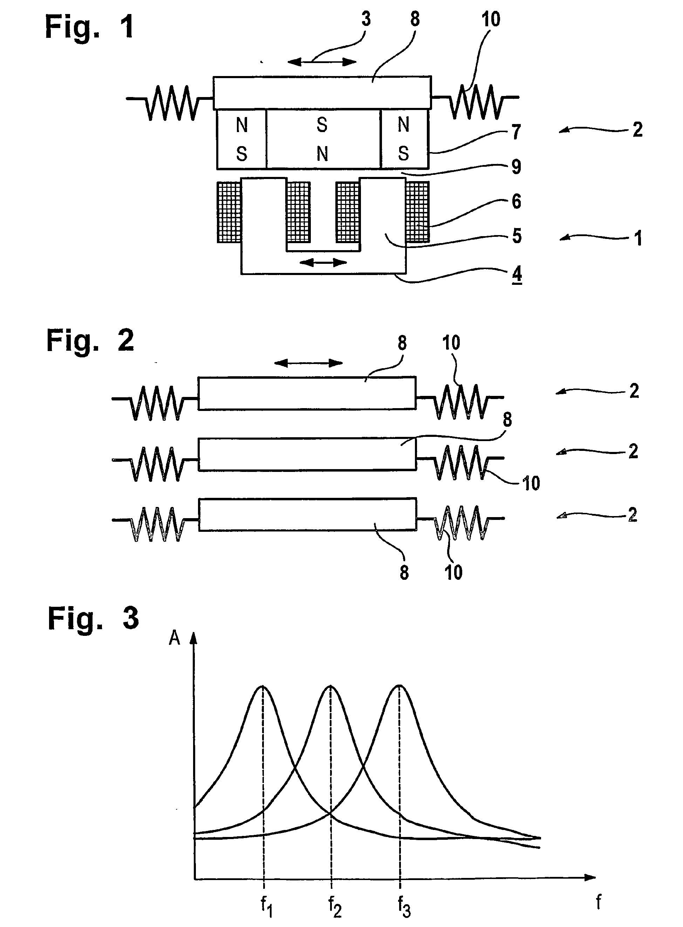

Fig. 1 zeigt ein Ausführungsbeispiel eines oszillierenden Linearmotors in einer schematischen Seitenanicht. Der Linearmotor weist einen ortsfest angeordneten Stator 1 und drei Läufer 2 auf, die jeweils eine lineare Schwingungsbewegung ausführen können. Da die drei Läufer 2 hintereinander angeordnet sind, ist in der Darstellung der Fig. 1 nur der vorderste Läufer 2 sichtbar. Fig. 2 zeigt die Läufer 2 in einer schematischen Aufsicht, so daß in Fig. 2 alle drei Läufer 2 sichtbar sind. Die Schwingungsbewegungen der Läufer 2 sind in den Fig. 1 und 2 durch einen Doppelpfeil 3 veranschaulicht. Der Stator 1 besteht aus einem Eisenkern 4, der in Form eines "U" ausgebildet ist, und zwei Schenkel 5 aufweist, um die jeweils ein Teil einer Spule 6 gewickelt ist. Die Spule 6 ist im Schnitt dargestellt um den Blick auf den Eisenkern 4 freizugeben. Die beiden Teile der Spule 6 sind elektrisch miteinander verbunden und können auch räumlich zusammen angeordnet werden, indem sie beispielsweise um den die beiden Schenkel 5 des Eisenkerns 4 verbindenden Querbalken gewickelt werden. Die Läufer 2 weisen je drei Dauermagnete 7 auf, die jeweils mit einem ihrer Pole an einer Trägerplatte 8 anliegen-und mit antiparalleler Orientierung dicht nebeneinander angeordnet sind. Die Dauermagnete 7 sind bis auf einen Luftspalt 9 den Stirnseiten der Schenkel 5 des Eisenkerns 4 angenähert. Die Trägerplatten 8 bestehen ebenso wie der Eisenkern 4 aus einem Eisenwerkstoff und sind an zwei entgegengesetzten Seiten jeweils mit einem Ende je einer Feder 10 verbunden. Die anderen Enden der Federn 10 sind ortsfest aufgehängt, beispielsweise an einem Gehäuse eines figürlich nicht dargestellten elektrischen Kleingeräts, in das der Linearmotor eingebaut ist, so daß die Läufer 2 die mit dem Doppelpfeil 3 bezeichneten linearen Schwingungsbewegungen ausführen können.

Im Betriebszustand des Linearmotors wird der Spule 6 ein elektrisches Signal zugeführt, so daß ein Stromfluß durch die Spule 6 hergestellt wird und sich im Eisenkern 4 ein Magnetfeld aufbaut. Insbesondere im Bereich der Stirnflächen der Schenkel 5 des Eisenkerns 4 wirkt das Magnetfeld auf die Dauermagnete 7 ein und bewirkt bei der in Fig. 1 dargestellten Geometrie eine seitliche Verschiebung der Läufer 2 relativ zum Stator 1. Die Richtung der Verschiebung hängt von der Stromrichtung in der Spule 6 ab. Mittels einer Variation des Stromflusses durch die Spule 6, bei der in der Regel auch die Stromrichtung variiert wird, und unterstützt von den Federn 10 können die Läufer 2 in lineare Schwingungsbewegungen versetzt werden. Das Schwingungsverhalten der Läufer 2 ist in Fig. 3 dargestellt.

Fig. 3 zeigt ein Diagramm zur Veranschaulichung des Schwingungsverhaltens des in den Fig. 1 und 2 dargestellten oszillierenden Linearmotors. Dabei sind auf der Abszisse die Anregungsfrequenz f und auf der Ordinate die Amplitude A der Schwingungsbewegung aufgetragen und für jeden der drei Läufer 2 ist eine Kurve für das Frequenzverhalten der Schwingungsamplitude A eingezeichnet. Die drei Kurven besitzen jeweils einen ähnlichen Verlauf, der sich durch eine maximale Schwingungsamplitude A bei der Resonanzfrequenz f1, f2 bzw. f3 und ein Abfallen der Amplitude A mit zunehmender Entfernung von der Resonanzfrequenz f1, f2 bzw. f3 zu niedrigen und zu hohen Anregungsfrequenzen f hin auszeichnet. Wegen der unterschiedlichen Resonanzfrequenzen f1, f2 und f3 der drei Läufer 2 sind die drei Kurven relativ zueinander versetzt.

Aus Fig. 3 ist unmittelbar ersichtlich, daß es jeweils von der gewählten Anregungsfrequenz f abhängt, wie stark die einzelnen Läufer 2 in Schwingung versetzt werden. Beispielsweise wird jeweils der Läufer 2 am stärksten in Schwingung versetzt, dessen Resonanzfrequenz f1, f2 bzw. f3 der gewählten Anregungsfrequenz f am nächsten liegt. Die anderen beiden Läufer 2 erreichen mit derselben Anregung nur eine geringere Schwingungsamplitude A oder werden möglicherweise gar nicht in Schwingung versetzt. Liegt die Anregungsfrequenz f beispielsweise genau in der Mitte zwischen den Resonanzfrequenzen f1 und f2 bzw. f2 und f3 zweier Läufer 2, so werden diese Läufer 2 zu Schwingungen gleicher Amplitude A angeregt. Durch die Wahl der Anregungsfrequenz f können somit die Schwingungsamplituden A der drei Läufer 2 individuell eingestellt werden. Allerdings lassen sich diese Schwingungsamplituden A durch eine einzige Anregungsfrequenz f nicht beliebig einstellen, da immer nur solche Kombinationen von Schwingungsamplituden A der drei Läufer 2 eingestellt werden können, die sich jeweils als Schnittpunkte der in Fig. 3 dargestellten Kurven mit einer bei der Anregungsfrequenz f eingezeichneten vertikalen Linie ergeben.

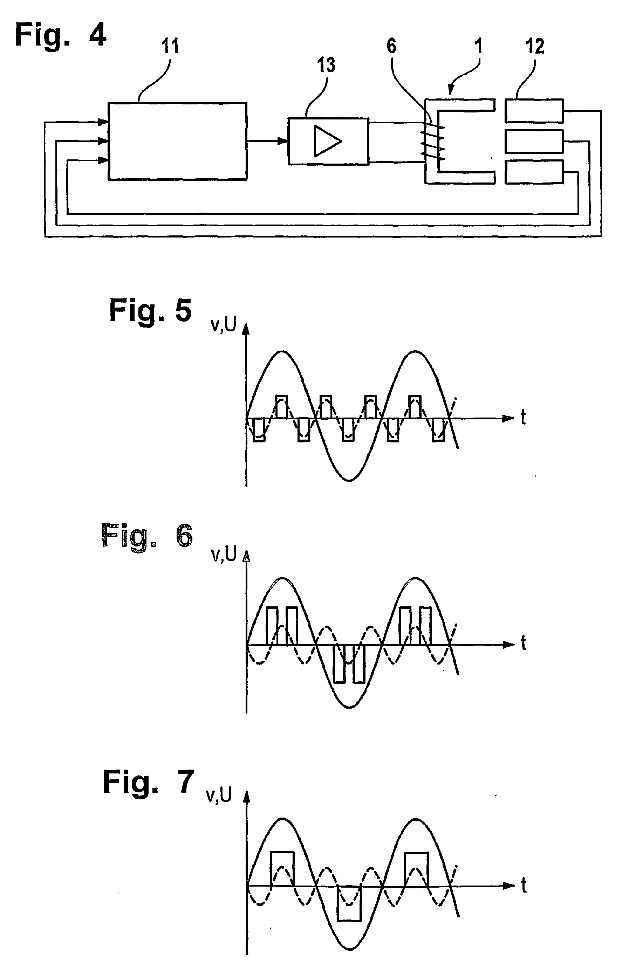

Eine im Rahmen der durch die Systemparameter vorgegebenen Grenzen beliebige Einstellung der Schwingungsamplituden A der drei Läufer 2 ist durch die Verwendung mehrerer Anregungsfrequenzen f möglich. Beispielsweise können drei Anregungsfrequenzen verwendet werden, die den drei Resonanzfrequenzen f1, f2 und f3 der Läufer 2 entsprechen. Die dadurch bei den Läufern 2 erzielten Schwingungsamplituden A hängen jeweils von den Amplituden der Anregungssignale ab. Je nach Schärfe der Resonanz kann durch jedes Anregungssignal zusätzlich eine geringfügige Beeinflussung der jeweils anderen beiden Läufer 2 erfolgen. Die konkrete Anwendung der vorstehend geschilderten Prinzipien zur individuellen Steuerung der Schwingungsbewegungen der Läufer 2 wird anhand von Fig. 4 erläutert.

Fig. 4 zeigt ein vereinfachtes Blockschaltbild zur Veranschaulichung des erfindungsgemäßen Steuerungsprinzips. Das für die Ansteuerung der Spule 6 des Stators 1 benötigte elektrische Signal wird von einem Mikrocontroller 11 erzeugt. Hierzu werden dem Mikrocontroller 11 Meßdaten von drei Sensoren 12 zugeführt. Mit den Sensoren 12 werden jeweils aktuelle Werte für die Schwingungsamplitude, Frequenz und Phasenlage der Läufer 2 erfaßt. Der Mikrocontroller 11 vergleicht diese aktuellen Werte mit jeweils vorgegebenen Sollwerten und steuert die Spule 6 so an, daß für jeden der drei Läufer 2 die Abweichungen von den Sollwerten eliminiert werden oder wenigstens auf ein Mindestmaß reduziert werden. Hierzu erzeugt der Mikrocontroller 11 drei elektrische Schwingungssignale, deren Frequenzen mit den Resonanzfrequenzen der drei Läufer 2 übereinstimmen. Die Amplituden der elektrischen Schwingungssignale hängen jeweils von den zuvor ermittelten Abweichungen der mit den Sensoren 12 erfaßten aktuellen Werte von den Sollwerten ab. Die elektrischen Schwingungssignale werden zu einem Summensignal überlagert, das über einen Leistungsverstärker 13 in die Spule 6 eingespeist wird. Die Spule 6 erhält somit ein elektrisches Signal mit drei Frequenzanteilen, die jeweils unterschiedliche Amplituden besitzen können und erzeugt ein entsprechendes Magnetfeld, das auf die drei Läufer 2 einwirkt. Je nach den im Magnetfeld enthaltenen Frequenzanteilen werden die drei Läufer 2 unterschiedlich beeinflußt und deren Schwingungszustände auf diese Weise individuell eingestellt. Das erzielte Ergebnis wird jeweils mit den Sensoren 12 überwacht und je nach Erfordernis wird durch eine entsprechende Ansteuerung der Spule 6 weiter korrigierend eingegriffen. Ein wichtiger Aspekt bei der beschriebenen Vorgehensweise besteht darin, daß alle drei Läufer 2 über dieselbe Spule 6 angesteuert werden und dennoch eine individuelle Steuerung der einzelnen Läufer 2 erfolgt. Dies wird letztendlich durch die unterschiedlichen Schwingungseigenschaften, insbesondere durch die unterschiedlichen Resonanzfrequenzen der Läufer 2 ermöglicht. Einzelheiten zur Ansteuerung der Spule 6 werden anhand der Fig. 5, 6 und 7 erläutert.

Fig. 5, 6, und 7 zeigen Diagramme zur Veranschaulichung der individuellen Ansteuerung von zwei Läufern 2 eines Linearmotors. Auf der Abszisse ist jeweils die Zeit t und auf der Ordinate die Geschwindigkeit v der Läufer 2 bzw. die Spannung U des vom Mikrocontroller 11 erzeugten Signals aufgetragen. Der erste Läufer 2 schwingt mit hoher Amplitude und niedriger Frequenz. Der zugehörige zeitliche Verlauf der Geschwindigkeit v ist jeweils als eine durchgezogene Linie dargestellt. Der zweite Läufer 2 schwingt mit einer deutlich geringeren Amplitude und der dreifachen Frequenz des ersten Läufers 2. Der zeitliche Verlauf der Geschwindigkeit v des zweiten Läufers 2 ist als eine gestrichelte Linie dargestellt. Das vom Mikrocontroller 11 erzeugte Signal besteht aus aufeinanderfolgenden Rechteckpulsen. Die Rechteckpulse lassen sich leichter erzeugen als beispielsweise Sinussignale.

In Fig. 5 ist eine Situation dargestellt, bei der positive Recheckpulse jeweils mit den Maxima und negative Recheckpulse jeweils mit den Minima der gestrichelt dargestellten Kurve zusammenfallen. Dies bedeutet, daß das elektrische Signal fortwährend eine Beschleunigung des mit höherer Frequenz schwingenden Läufers 2 bewirk und somit die Schwingungsbewegung dieses Läufers 2 verstärkt wird. Bezogen auf die durchgezogen dargestellte Kurve weisen die Rechteckpulse teils das gleiche und teils ein entgegengesetztes Vorzeichen auf, so daß sich die beschleunigende und die abbremsende Wirkung des elektrischen Signals bei dem mit niedrigerer Frequenz schwingenden Läufer 2 ungefähr aufhebt und die Schwingungsbewegung dieses Läufers 2 durch das elektrische Signal somit nicht nennenswert beeinflußt wird.

In Fig. 6 ist eine Situation dargestellt, bei der die Rechteckpulse jeweils mit einigen der Nulldurchgänge der gestrichelt dargestellten Kurve zusammenfallen und sich somit die beschleunigenden und abbremsenden Anteile des elektrischen Signals für den mit höherer Frequenz schwingenden Läufer 2 exakt aufheben. Bezüglich der durchgezogen dargestellten Kurve sind die positiven Recheckpulse jeweils in der Nähe der Maxima und die negativen Rechteckpulse jeweils in der Nähe der Minima angeordnet. Folglich ergibt sich für den mit der niedrigeren Frequenz schwingenden Läufer 2 durch das elektrische Signal jeweils eine Beschleunigung.

Bei der in Fig. 7 dargestellten Situation werden beide Läufer 2 beschleunigt, da die positiven Rechteckpulse mit Maxima und die negativen Rechteckpulse mit Minima beider Kurven zusammenfallen. Insgesamt geht somit aus den Fig. 5, 6 und 7 hervor, daß durch die Wahl der Phasenlage der Rechteckpulse relativ zu den Schwingungsbewegungen der beiden Läufer 2 die Möglichkeit besteht, auf die Läufer 2 individuell einzuwirken.

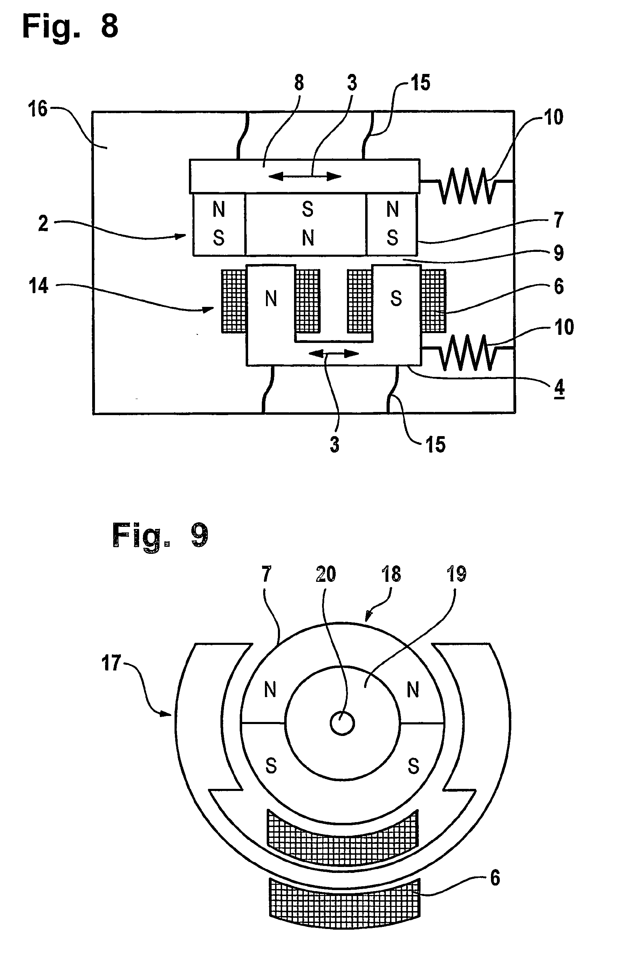

Das erfindungsgemäße Steuerverfahren kann auch zur Steuerung eines oszillierenden Linearmotors eingesetzt werden, der nicht über einen feststehenden Stator 1 verfügt, sondern über einen zusätzlichen Läufer, der konstruktiv wie der Stator 1 aufgebaut ist, jedoch beweglich ist. Ein derartiger statorloser, oszillierender Linearmotor ist in Fig. 8 dargestellt.

Fig. 8 zeigt ein Ausführungsbeispiel für einen statorlosen, oszillierenden Linearmotor in einer schematischen Seitenansicht. Anstelle des Stators 1 des in Fig. 1 dargestellten Ausführungsbeispiels weist das in Fig. 8 dargestellte Ausführungsbeispiel eine Komponente auf, die im folgenden als aktiver Läufer 14 bezeichnet wird. Der aktive Läufer 14 ist konstruktiv wie der Stator 1 des in Fig. 1 dargestellten Ausführungsbeispiel aufgebaut und dient in analoger Weise dazu, ein Magnetfeld auszubilden, mit dessen Hilfe der Läufer 2 angetrieben wird. Die Besonderheit des aktiven Läufers 14 besteht allerdings darin, daß er im Gegensatz zum Stator 1 nicht ortsfest fixiert ist, sondern über Schwingbrücken 15 beweglich an einem Gehäuse16 des elektrischen Kleingeräts aufgehängt ist. Bei den Schwingbrücken 15 handelt es sich um Blattfedern, die über eine relativ kleine Federkonstante verfügen und somit nur eine schwache Kopplung an das Gehäuse 16 ausbilden. Weiterhin ist der aktive Läufer 14 über eine Feder 10 mit dem Gehäuse 16 verbunden, um ein schwingungsfähiges System zu erhalten. In entsprechender Weise ist auch der Läufer 2, der identisch zu dem in Fig. 1 dargestellten Ausführungsbeispiel aufgebaut ist, über Schwingbrücken 15 und eine Feder 10 mit dem Gehäuse 16 verbunden. Dabei kann ein einziger Läufer 2 oder es können mehrere Läufer 2 vorgesehen sein.

In seiner Funktionsweise unterscheidet sich das in Fig. 8 dargestellte Ausführungsbeispiel von dem Ausführungsbeispiel gemäß Fig. 1 darin, daß der aktive Läufer 14 ebenfalls in eine Schwingungsbewegung versetzt wird. Die Schwingungsbewegung des aktiven Läufers 14 verläuft dabei gegenphasig zur Schwingungsbewegung des Läufers 2. Bezüglich der individuellen Steuerung der Schwingungsbewegungen treffen die für das in Fig. 1 dargestellte Ausführungsbeispiel des Linearmotors mit dem Stator 1 gemachten Angaben auch für das vorliegende Ausführungsbeispiel mit dem aktiven Läufer 14 zu, wobei sich der aktive Läufer 14 bezüglich seiner Schwingungsbewegung wie ein herkömmlicher Läufer 2 verhält.

Die vorstehend beschriebenen Ausführungsbeispiele für einen oszillierenden Linearmotor können beispielsweise bei einem elektrischen Rasierapparat eingesetzt werden. Dies gilt sowohl für das in Fig. 1 dargestellte Ausführungsbeispiel mit dem Stator 1 als auch für das in Fig. 8 dargestellte Ausführungsbeispiel mit dem aktiven Läufer 14. So können beispielsweise bei dem in Fig. 1 dargestellten Ausführungsbeispiel zwei Läufer 2 mit je einem Schermesser verbunden sein und diese mit gleicher Frequenz und gleicher konstanter Amplitude antreiben. Falls keine weiteren Komponenten des Rasierapparats angetrieben werden sollen, werden abweichend von der in Fig. 2 für dieses Ausführungsbeispiel dargestellten Läuferanordnung lediglich zwei Läufer 2 benötigt. In diesem Fall kann das in Fig. 8 dargestellte Ausführungsbeispiel in entsprechender Weise eingesetzt werden. Dabei werden der Läufer 2 und der aktive Läufer 14 jeweils mit einem der beiden Schermesser verbunden. Bei beiden Ausführungsbeispielen werden die Resonanzfrequenzen der beiden schwingungsfähigen Systeme, d. h. der beiden Läufer 2 bzw. des aktiven Läufers 14 und des Läufers 2 sowie der jeweils damit verbundenen Schermesser und der zugehörigen Federn 10, leicht unterschiedlich gewählt. Für die Ansteuerung der Spule 6 wird ein elektrisches Signal erzeugt, das nur eine Frequenz enthält, die zwischen den beiden Resonanzfrequenzen liegt. Durch die Änderung der Frequenz des elektrischen Signals in Richtung der einen oder der anderen Resonanzfrequenz lassen sich die Amplituden der beiden Läufer 2 bzw. des Läufers 2 und des aktiven Läufers 14 auch unter Belastung gleich halten. Insgesamt werden die beiden Läufer 2 bzw. der Läufer 2 und der aktive Läufer 14 so angesteuert, daß sie mit gleicher Frequenz, gleicher Amplitude und gegenphasig schwingen, so daß daraus nur relativ geringe Gehäusevibrationen resultieren. Bei Verwendung eines Linearmotors gemäß dem in Fig. 1 dargestellten Ausführungsbeispiel ist zu beachten, daß die Magnetanordnungen der beiden Läufer 2 unterschiedlich gepolt sind, um gegenphasige Schwingungen zu erzeugen.

Weiterhin ist es auch möglich, mit dem oszillierenden Linearmotor zusätzlich einen Langhaarschneider und ggf. auch einen Mittelschneider des Rasierapparats anzutreiben. Hierzu wird bei dem in Fig. 1 dargestellten Ausführungsbeispiel des Linearmotors eine entsprechende Anzahl von Läufern 2 vorgesehen, die die jeweiligen Komponenten des Rasierapparats antreiben. Um den Langhaarschneider bzw. den Mittelschneider nach Bedarf an- oder auszuschalten, wird das elektrische Signal zur Ansteuerung der Spule 6 so ausgebildet, daß es zusätzlich die Resonanzfrequenzen für die entsprechenden Schwingungssysteme enthält, so daß die Läufer 2, die den Langhaarschneider bzw. den Mittelschneider antreiben, wahlweise in einen Schwingungszustand versetzt werden können. Dabei werden jeweils die Schneideinrichtungen, deren Resonanzfrequenzen nicht im elektrischen Signal enthalten sind, nicht angetrieben und sind somit ausgeschaltet.

Das erfindungsgemäße Steuerverfahren kann nicht nur bei oszillierenden Linearmotoren, sondern auch bei oszillierenden Rotationsmotoren angewendet werden.

Fig. 9 zeigt ein Ausführungsbeispiel für einen statorlosen, oszillierenden Rotationsmotor in einer schematischen Seitenansicht. Der statorlose Rotationsmotor weist ähnliche Funktionskomponenten wie der in Fig. 8 dargestellte statorlose Linearmotor auf. Allerdings sind diese Funktionskomponenten jeweils so abgewandelt, daß anstelle einer oszillierenden Linearbewegung eine oszillierende Rotationsbewegung entsteht. So weist der statorlose Rationsmotor einen äußeren Rotor 17 auf, der drehbar aufgehängt ist und aus einem Eisenwerkstoff besteht. Der äußere Rotor 17 verläuft bereichsweise innerhalb der Spule 6 ohne diese jedoch zu berühren, so daß der äußere Rotor 17 relativ zu der ortsfest angeordneten Spule 6 verdreht werden kann. Innerhalb des äußeren Rotors 17 ist ein innerer Rotor 18 angeordnet, der einen Rotorkern 19 aus einem Eisenwerkstoff und daran befestigte Dauermagnete 7 aufweist. Der innere Rotor 18 ist ebenfalls drehbar aufgehängt, wobei der äußere Rotor 17 und der innere Rotor 18 über eine gemeinsame Drehachse 20 verfügen. Des weiteren weist der Rotationsmotor noch eine Reihe von Federelementen auf, die zwischen dem äußeren Rotor 17 und dem Gehäuse 16 sowie dem inneren Rotor 18 und dem Gehäuse 16 angeordnet sind und aus Gründen der Übersichtlichkeit in Fig. 9 nicht eingezeichnet sind. Der Rotationsmotor weist somit zwei schwingungsfähige Systeme auf. Im Hinblick auf die Steuerung des Rotationsmotors gelten die vorstehenden Erläuterungen zur Steuerung des Linearmotors in analoger Weise.

Der Rotationsmotor kann beispielsweise als Antrieb für eine elektrische Zahnbürste verwendet werden, wobei das in Fig. 9 dargestellte Ausführungsbeispiel des Rotationsmotors zwei verschiedene Putzbewegungen ermöglicht.

## Patentansprüche

1. Verfahren zur Steuerung eines Elektromotors mit mehreren schwingungsfähigen Motorkomponenten (2, 14, 17, 18) zum Antreiben eines elektrischen Kleingeräts, wobei die schwingungsfähigen Motorkomponenten (2, 14, 17, 18) durch ein Magnetfeld, das von einer Spule (6) gemeinsam für die schwingungsfähigen Motorkomponenten (2, 14, 17, 18) erzeugt wird, in Schwingungsbewegungen versetzt werden, **dadurch gekennzeichnet, daß** die Schwingungsbewegungen der schwingungsfähigen Motorkomponenten (2, 14, 17, 18) mittels eines elektrischen Signals, das der Spule (6) zugeführt wird, individuell gesteuert werden.

2. Verfahren nach Anspruch 1, **dadurch gekennzeichnet, daß** die schwingungsfähigen Motorkomponenten (2, 14, 17, 18) jeweils Bestandteile von Schwingungssystemen mit unterschiedlichen Resonanzfrequenzen sind.

3. Verfahren nach einem der vorhergehenden Ansprüche, **dadurch gekennzeichnet, daß** die Schwingungsbewegungen der schwingungsfähigen Motorkomponenten (2, 14, 17, 18) jeweils über die Vorgabe der Frequenz des der Spule (6) zugeführten elektrischen Signals individuell gesteuert werden.

4. Verfahren nach einem der Ansprüche 1 oder 2, **dadurch gekennzeichnet, daß** das der Spule (6) zugeführte elektrische Signal mehrere unterschiedliche Frequenzen enthält und die Schwingungsbewegungen der schwingungsfähigen Motorkomponenten (2, 14, 17, 18) jeweils über die Gewichtung der einzelnen Frequenzen im elektrischen Signal individuell gesteuert werden.

5. Verfahren nach Anspruch 4, **dadurch gekennzeichnet, daß** die einzelnen Frequenzen den Resonanzfrequenzen der Schwingungssysteme entsprechen, die mit den schwingungsfähigen Motorkomponenten (2, 14, 17, 18) ausgebildet werden.

6. Verfahren nach einem der vorhergehenden Ansprüche, **dadurch gekennzeichnet, daß** das elektrische Signal der Spule (6) in Form von Pulsen zugeführt wird.

7. Verfahren nach Anspruch 6, **dadurch gekennzeichnet, daß** die Schwingungsbewegungen der schwingungsfähigen Motorkomponenten (2, 14, 17, 18) jeweils über die Vorgabe eines Pulsmusters für das der Spule (6) zugeführte elektrische Signal individuell gesteuert werden.

8. Verfahren nach einem der vorhergehenden Ansprüche, **dadurch gekennzeichnet, daß** die Schwingungsamplituden der schwingungsfähigen Motorkomponenten (2, 14, 17, 18) mittels des der Spule (6) zugeführten elektrischen Signals individuell gesteuert werden.

9. Verfahren nach einem der vorhergehenden Ansprüche, **dadurch gekennzeichnet, daß** die schwingungsfähigen Motorkomponenten (2, 14, 17, 18) mittels des der Spule (6) zugeführten elektrischen Signals individuell ein- oder ausgeschaltet werden.

10. Verfahren nach einem der vorhergehenden Ansprüche, **dadurch gekennzeichnet, daß** Kenngrößen der tatsächlichen Schwingungsbewegungen der schwingungsfähigen Motorkomponenten (2, 14, 17, 18) mit Hilfe von Sensoren (12) individuell für die schwingungsfähigen Motorkomponenten (2, 14, 17, 18) erfaßt werden.

11. Verfahren nach Anspruch 10, **dadurch gekennzeichnet, daß** als Kenngrößen der tatsächlichen Schwingungsbewegungen der schwingungsfähigen Motorkomponenten (2, 14, 17, 18) jeweils die Amplitude und/oder Frequenz und/oder Phase herangezogen werden.

12. Verfahren nach einem der Ansprüche 10 oder 11, **dadurch gekennzeichnet, daß** die Erzeugung des der Spule (6) zugeführten elektrischen Signals jeweils abhängig von den erfaßten Kenngrößen durchgeführt wird.

13. Verfahren nach einem der Ansprüche 10 bis 12, **dadurch gekennzeichnet, daß** die Erzeugung des der Spule (6) zugeführten elektrischen Signals mittels einer geschlossenen Regelschleife durchgeführt wird.

14. Elektrisches Kleingerät mit einem Elektromotor, der mehrere schwingungsfähige Motorkomponenten (2, 14, 17, 18) aufweist, die mittels einer gemeinsamen Spule (6) antreibbar sind, sowie mit einer Steuereinrichtung (11) zur Ausgabe eines elektrischen Signals an die Spule (6), um wenigstens zeitweise ein Magnetfeld zur Beeinflussung der Schwingungsbewegungen der schwingungsfähigen Motorkomponenten (2, 14, 17, 18) zur erzeugen, **dadurch gekennzeichnet, daß** mit der Steuereinrichtung (11) ein elektrisches Signal zur individuellen Beeinflussung der Schwingungsbewegungen der schwingungsfähigen Motorkomponenten (2, 14, 17, 18) erzeugbar ist.

15. Elektrisches Kleingerät nach Anspruch 14, **dadurch gekennzeichnet, daß** eine der schwingungsfähigen Motorkomponenten (14, 17) als ein Spulenkern für die Spule (6) ausgebildet ist.

16. Elektrisches Kleingerät nach Anspruch 15, **dadurch gekennzeichnet, daß** die als Spulenkern ausgebildete schwingungsfähige Motorkomponente (17) relativ zur Spule (6) beweglich angeordnet ist.

17. Elektrisches Kleingerät nach einem der Ansprüche 14 bis 16, **dadurch gekennzeichnet, daß** der Elektromotor als oszillierender Linearmotor ausgebildet ist.

18. Elektrisches Kleingerät nach Anspruch 17, **dadurch gekennzeichnet, daß** es als ein elektrischer Rasierapparat ausgebildet ist.

19. Elektrisches Kleingerät nach einem der Ansprüche 14 bis 16, **dadurch gekennzeichnet, daß** der Elektromotor als oszillierender Rotationsmotor ausgebildet ist.

20. Elektrisches Kleingerät nach Anspruch 19, **dadurch gekennzeichnet, daß** es als eine elektrische Zahnbürste ausgebildet ist.

## Claims

1. A method of controlling an electric motor comprising several oscillatory motor components (2, 14, 17, 18) for the purpose of driving a small electric appliance, said oscillatory motor components (2, 14, 17, 18) being excited into oscillatory motion by means of a magnetic field which is jointly generated by a coil (6) for the oscillatory motor components (2, 14, 17, 18), **characterized in that** the oscillation movements of the oscillatory motor components (2, 14, 17, 18) are controlled individually by means of an electric signal which is supplied to the coil (6).

2. The method according to claim 1, **characterized in that** the oscillatory motor components (2, 14, 17, 18) are each components of oscillatory systems with different resonant frequencies.

3. The method according to any one of the preceding claims, **characterized in that** the oscillation movements of the oscillatory motor components (2, 14, 17, 18) are individually controlled by presetting the frequency of the electric signal supplied to the coil (6).

4. The method according to any one of the claims 1 or 2, **characterized in that** the electric signal which is supplied to the coil (6) includes several different frequencies, and the oscillation movements of the oscillatory motor components (2, 14, 17, 18) are individually controlled by weighting the individual frequencies in the electric signal.

5. The method according to claim 4, **characterized in that** the individual frequencies correspond to the resonant frequencies of the oscillatory systems which are formed by the oscillatory motor components (2, 14, 17, 18).

6. The method according to any one of the preceding claims, **characterized in that** the electric signal is supplied to the coil (6) in the form of pulses.

7. The method according to claim 6, **characterized in that** the oscillation movements of the oscillatory motor components (2, 14, 17, 18) are individually controlled by presetting a pulse pattern for the electric signal which is supplied to the coil (6).

8. The method according to any one of the preceding claims, **characterized in that** the oscillation amplitudes of the oscillatory motor components (2, 14, 17, 18) are individually controlled by means of the electric signal supplied to the coil (6).

9. The method according to any one of the preceding claims, **characterized in that** the oscillatory motor components (2, 14, 17, 18) are switched on or off individually by means of the electric signal which is supplied to the coil (6).

10. The method according to any one of the preceding claims, **characterized in that** characteristic quantities of the actual oscillation movements of the oscillatory motor components (2, 14, 17, 18) are detected individually for the oscillatory motor components (2, 14, 17, 18) with the aid of sensors (12).

11. The method according to claim 10, **characterized in that** the amplitude and/or frequency and/or phase serve as characteristic quantities of the actual oscillation movements of the oscillatory motor components (2, 14, 17, 18).

12. The method according to any one of the claims 10 or 11, **characterized in that** the electric signal which is supplied to the coil (6) is generated as a function of the detected characteristic quantities.

13. The method according to any one of the claims 10 to 12, **characterized in that** the generation of the electric signal fed to the coil (6) is performed by means of a closed control loop.

14. A small electric appliance having an electric motor with several oscillatory motor components (2, 14, 17, 18) adapted to be driven by a shared coil (6), and further having a control device (11) for outputting an electric signal to the coil (6) for the purpose of at least temporarily generating a magnetic field which influences the oscillation movements of the oscillatory motor components (2, 14, 17, 18), **characterized in that** an electric signal which individually influences the oscillation movements of the oscillatory motor components (2, 14, 17, 18) can be generated by means of the control device (11).

15. The small electric appliance according to claim 14, **characterized in that** one of the oscillatory motor components (14, 17) is constructed as a coil core for the coil (6).

16. The small electric appliance according to claim 15, **characterized in that** the oscillatory motor component (17) constructed as coil core is arranged for movement relative to the coil (6).

17. The small electric appliance according to any one of the claims 14 to 16, **characterized in that** the electric motor is constructed as a linear oscillation motor.

18. The small electric appliance according to claim 17, **characterized in that** it is constructed as an electric shaving apparatus.

19. The small electric appliance according to any one of the claims 14 to 16, **characterized in that** the electric motor is constructed as a rotary oscillation motor.

20. The small electric appliance according to claim 19, **characterized in that** it is constructed as an electric toothbrush.

## Revendications

1. Procédé pour commander un moteur électrique comprenant plusieurs composants de moteur oscillants (2, 14, 17, 18) destiné à entraîner un petit appareil électrique, les composants de moteur oscillants (2, 14, 17, 18) étant amenés en un mouvement oscillatoire par un champ magnétique qui est généré par une bobine (6) commune pour les composants de moteur oscillants (2, 14, 17, 18), **caractérisé en ce que** les mouvements oscillatoires des composants de moteur oscillants (2, 14, 17, 18) sont commandés individuellement au moyen d'un signal électrique qui est acheminé à la bobine (6).

2. Procédé selon la revendication 1, **caractérisé en ce que** les composants de moteur oscillants (2, 14, 17, 18) sont respectivement les composants de systèmes oscillatoires ayant des fréquences de résonance différentes.

3. Procédé selon l'une des revendications précédentes, **caractérisé en ce que** les mouvements oscillatoires des composants de moteur oscillants (2, 14, 17, 18) sont à chaque fois commandés individuellement en prédéfinissant la fréquence du signal électrique acheminé à la bobine (6).

4. Procédé selon l'une des revendications 1 ou 2, **caractérisé en ce que** le signal électrique acheminé à la bobine (6) contient plusieurs fréquences différentes et les mouvements oscillatoires des composants de moteur oscillants (2, 14, 17, 18) sont à chaque fois commandés individuellement par la pondération des fréquences individuelles dans le signal électrique.

5. Procédé selon la revendication 4, **caractérisé en ce que** les fréquences individuelles correspondent aux fréquences de résonance des systèmes oscillatoires qui sont réalisés avec les composants de moteur oscillants (2, 14, 17, 18).

6. Procédé selon l'une des revendications précédentes, **caractérisé en ce que** le signal électrique est acheminé à la bobine (6) sous la forme d'impulsions.

7. Procédé selon la revendication 6, **caractérisé en ce que** les mouvements oscillatoires des composants de moteur oscillants (2, 14, 17, 18) sont à chaque fois commandés individuellement en prédéfinissant un modèle d'impulsion pour le signal électrique acheminé à la bobine (6).

8. Procédé selon l'une des revendications précédentes, **caractérisé en ce que** les amplitudes d'oscillation des composants de moteur oscillants (2, 14, 17, 18) sont commandées individuellement au moyen du signal électrique acheminé à la bobine (6).

9. Procédé selon l'une des revendications précédentes, **caractérisé en ce que** les composants de moteur oscillants (2, 14, 17, 18) sont mis en service ou hors service individuellement au moyen du signal électrique acheminé à la bobine (6).

10. Procédé selon l'une des revendications précédentes, **caractérisé en ce que** les grandeurs caractéristiques des mouvements oscillatoires réels des composants de moteur oscillants (2, 14, 17, 18) sont acquises individuellement pour les composants de moteur oscillants (2, 14, 17, 18) à l'aide de capteurs (12).

11. Procédé selon la revendication 10, **caractérisé en ce que** les grandeurs caractéristiques utilisées des mouvements oscillatoires réels des composants de moteur oscillants (2, 14, 17, 18) sont respectivement l'amplitude et/ou la fréquence et/ou la phase.

12. Procédé selon l'une des revendications 10 ou 11, **caractérisé en ce que** la génération du signal électrique acheminé à la bobine (6) est à chaque fois effectuée en fonction des grandeurs caractéristiques acquises.

13. Procédé selon l'une des revendications 10 à 12, **caractérisé en ce que** la génération du signal électrique acheminé à la bobine (6) est effectuée au moyen d'un circuit de régulation fermé.

14. Petit appareil électrique comprenant un moteur électrique qui présente plusieurs composants de moteur oscillants (2, 14, 17, 18) qui peuvent être entraînés au moyen d'une bobine (6) commune ainsi qu'un dispositif de commande (11) destiné à délivrer un signal électrique à la bobine (6) pour générer au moins temporairement un champ magnétique destiné à influencer les mouvements oscillatoires des composants de moteur oscillants (2, 14, 17, 18), **caractérisé en ce qu'**un signal électrique destiné à influencer individuellement les mouvements oscillatoires des composants de moteur oscillants (2, 14, 17, 18) peut être généré avec le dispositif de commande (11).

15. Petit appareil électrique selon la revendication 14, **caractérisé en ce que** l'un des composants de moteur oscillants (14, 17) est réalisé sous la forme d'un noyau pour la bobine (6).

16. Petit appareil électrique selon la revendication 15, **caractérisé en ce que** le composant de moteur oscillant (17) réalisé sous la forme d'un noyau de bobine est mobile par rapport à la bobine (6).

17. Petit appareil électrique selon l'une des revendications 14 à 16, **caractérisé en ce que** le moteur électrique est réalisé sous la forme d'un moteur linéaire oscillant.

18. Petit appareil électrique selon la revendication 17, **caractérisé en ce qu'**il est réalisé sous la forme d'un rasoir électrique.

19. Petit appareil électrique selon l'une des revendications 14 à 16, **caractérisé en ce que** le moteur électrique est réalisé sous la forme d'un moteur rotatif oscillant.

20. Petit appareil électrique selon la revendication 19, **caractérisé en ce qu'**il est réalisé sous la forme d'une brosse à dents électrique.
